# EUROPEAN PATENT APPLICATION

(11) **EP 4 693 859 A1**
(43) Date of publication of application: **11.02.2026**
(21) Application number: 25191384.4
(22) Date of filing: 23.07.2025
(51) Int. Cl.: H02M 1/00, H02M 1/42

(54) **METHOD AND POWER FACTOR CORRECTION CIRCUIT, AND POWER SUPPLY DEVICE**

(30) Priority: 26.07.2024 CN 202411019451
(71) Applicant: Delta Electronics (Shanghai) Co., Ltd., Shanghai 201209 (CN)
(72) Inventor: ZHANG, Xinghua, PUDONG, SHANGHAI 201209 (CN); HU, Yong, PUDONG, SHANGHAI 201209 (CN); WU, Jiefeng, PUDONG, SHANGHAI 201209 (CN)
(74) Representative: Cabinet Beau de Loménie

(57) **Abstract**

The present disclosure provides a power factor correction circuit, which includes: a PFC main circuit, including a main switch; a control circuit, electrically coupled to the PFC main circuit; and a compensation circuit, including a sampling circuit, an inverting operational amplifier circuit and a regulating circuit. The inverting operational amplifier circuit generates an inverting signal according to a first sampling signal and a second sampling signal collected by the sampling circuit. The regulating circuit generates a compensation additional value according to the input voltage, and generates, according to the inverting signal and the compensation additional value, a compensation signal corresponding to the input voltage, and outputs the compensation signal to the control circuit. The control circuit adjusts, according to the compensation signal, an on-time of the main switch around an input voltage zero-crossing point, which can achieve the THD optimization under the input voltage.

## Description

### TECHNICAL FIELD

The present disclosure relates to the field of electronic circuit control technologies, and in particular to a method and power factor correction circuit, and a power supply device.

### BACKGROUND

With the development of society, the market has increasingly higher quality requirements for power conversion products. Power Factor (PF) and Total Harmonic Distortion (THD) are key indicators of the power quality of such products, where PF is the ratio of active power to apparent power, and a higher PF indicates greater efficiency in the utilization of electrical energy by the load.

In order to better meet the market demands for the power conversion products, it is necessary to further improve the existing Power Factor Correction (PFC) technologies.

It should be noted that the information disclosed in the Background section above is only for enhancing the understanding of the background of the present disclosure, and thus may include information that does not constitute prior art known to those of ordinary skill in the art.

### SUMMARY

The present disclosure provides a method and power factor correction circuit, and a power supply device, which at least to a certain extent solve the problem that the existing power factor correction technologies have poor effect and need further improvement.

According to a first aspect of the present disclosure, there is provided a power factor correction circuit, including:
a PFC main circuit, including a main switch;
a control circuit, electrically coupled to the PFC main circuit, and configured to control the main switch; and
a compensation circuit, including a sampling circuit, an inverting operational amplifier circuit and a regulating circuit, wherein the sampling circuit is configured to respectively detect a first sampling signal reflecting an input voltage of the PFC main circuit and a second sampling signal reflecting an output voltage of the PFC main circuit, the inverting operational amplifier circuit generates an inverting signal according to the first sampling signal and the second sampling signal, the regulating circuit generates a compensation additional value according to the input voltage, and generates, according to the inverting signal and the compensation additional value, a compensation signal corresponding to the input voltage, and outputs the compensation signal to the control circuit;
wherein the control circuit adjusts, according to the compensation signal, an on-time of the main switch around an input voltage zero-crossing point.

In an embodiment of the present disclosure, the regulating circuit includes a first capacitor and a second capacitor, and the regulating circuit is further configured to: adjust states of the first capacitor and the second capacitor according to the input voltage.

In an embodiment of the present disclosure, the regulating circuit is further configured to:
control the first capacitor to be in an operating state and the second capacitor to be in a non-operating state; or
control the first capacitor to be in the non-operating state and the second capacitor to be in the operating state.

In an embodiment of the present disclosure, the regulating circuit is further configured to
connect the first capacitor and the second capacitor in series, and make the first capacitor and the second capacitor be in operating states; or
connect the first capacitor and the second capacitor in parallel, and make the first capacitor and the second capacitor be in the operating states.

In an embodiment of the present disclosure, the regulating circuit further includes a third capacitor, and the regulating circuit is further configured to: adjust, according to the input voltage, a connection relation and states of the first capacitor, the second capacitor and the third capacitor.

In an embodiment of the present disclosure, an equivalent capacitance value of a capacitor in the operating state in the regulating circuit is positively correlated with the input voltage.

In an embodiment of the present disclosure, the regulating circuit is further configured to:
calculate the difference between the first sampling signal and the second sampling signal, and invert the difference to obtain the inverting signal.

In an embodiment of the present disclosure, the input voltage zero-crossing point is determined according to the input voltage and the inverting signal.

In an embodiment of the present disclosure, the control circuit increases, according to the compensation signal, the on-time of the main switch around the input voltage zero-crossing point to compensate for an on-time loss caused by hardware.

In an embodiment of the present disclosure, the regulating circuit generates a compensation additional value according to a control signal, and the control signal is obtained by hardware detecting the input voltage of the PFC main circuit.

In an embodiment of the present disclosure, the control signal is generated by the control circuit according to the input voltage of the PFC main circuit.

According to a second aspect of the present disclosure, there is provided a power supply device, including the power factor correction circuit as described in the first aspect.

According to a third aspect of the present disclosure, there is provided a method for power factor correction, which is applied to the power factor correction circuit of the first aspect, and the method includes:
generating, by the inverting operational amplifier circuit, an inverting signal according to a first sampling signal and a second sampling signal, wherein the first sampling signal reflects the input voltage of the PFC main circuit, and the second sampling signal reflects the output voltage of the PFC main circuit;
generating, by the regulating circuit, a compensation additional value according to the input voltage, generating, according to the inverting signal and the compensation additional value, a compensation signal corresponding to the input voltage, and outputting the compensation signal to the control circuit; and
adjusting, by the control circuit, an on-time of the main switch around the input voltage zero-crossing point according to the compensation signal.

In the method and power factor correction circuit, and the power supply device provided by embodiments of the present disclosure, the regulating circuit is provided in the compensation circuit, and the regulating circuit can generate the compensation additional value according to the input voltage, and generate, according to the inverting signal and the compensation additional value, the compensation signal corresponding to the input voltage , so that the compensation signal changes with the input voltage and is more suitable for the current input voltage level. Then, the control circuit adjusts, according to the compensation signal, the on-time of the main switch around the input voltage zero-crossing point, which can achieve the THD optimization under the input voltage and better optimize the THD at the PFC level.

It should be noted that the above general description and the following detailed description are merely exemplary and explanatory and should not be construed as limiting of the disclosure.

### BRIEF DESCRIPTION OF THE DRAWINGS

The drawings herein are incorporated in and constitute a part of the specification, illustrate embodiments consistent with the present disclosure, and together with the description serve to explain principles of the present disclosure. Apparently, the drawings in the following description are only some embodiments of the present disclosure. For those of ordinary skill in the art, other drawings may be obtained based on these drawings without paying any creative effort.
FIG. 1 shows a schematic diagram of a power factor correction circuit according to an embodiment of the present disclosure;
FIG. 2a shows a schematic diagram of a PFC main circuit according to an embodiment of the present disclosure;
FIG. 2b shows a schematic diagram of another PFC main circuit according to an embodiment of the present disclosure;
FIG. 3 shows a schematic diagram of an input voltage and a compensation signal according to an embodiment of the present disclosure;
FIG. 4 shows a schematic diagram of a compensation circuit according to an embodiment of the present disclosure;
FIG. 5 shows a schematic diagram of another compensation circuit according to an embodiment of the present disclosure;
FIG. 6 shows a schematic diagram of yet another compensation circuit according to an embodiment of the present disclosure;
FIG. 7 shows a schematic diagram of a regulating circuit according to an embodiment of the present disclosure;
FIG. 8 shows a schematic diagram of another regulating circuit according to an embodiment of the present disclosure;
FIG. 9 shows a schematic diagram of yet another regulating circuit according to an embodiment of the present disclosure;
FIG. 10 shows a schematic diagram of still another regulating circuit according to an embodiment of the present disclosure;
FIG. 11 shows a schematic diagram of a power supply device according to an embodiment of the present disclosure; and
FIG. 12 shows a flowchart of a method for power factor correction according to an embodiment of the present disclosure.

### DETAILED DESCRIPTION

In order to make objectives, technical solutions and advantages of embodiments of the present disclosure clearer, the technical solutions in the embodiments of the present disclosure will be clearly and completely described below in conjunction with the drawings in the embodiments of the present disclosure. Obviously, the described embodiments are only a part of the embodiments of the present disclosure, rather than all the embodiments. Components of the embodiments of the present disclosure generally described and shown in the drawings herein can be arranged and designed in various different configurations. Therefore, the following detailed description of the embodiments of the present disclosure provided in the drawings is not intended to limit the scope of the claimed invention, but merely represents the selected embodiments of the present disclosure. Based on the embodiments of the present disclosure, all other embodiments obtained by those skilled in the art without making creative effort belong to the scope of protection of the present disclosure.

In AC-DC power conversion products, key indicators of the power quality include Power Factor (PF) and Total Harmonic Distortion (THD). In order to improve the performance of THD and PF of the AC-DC power conversion products, Power Factor Correction (PFC) technologies came into being, which include passive PFC technologies and active PFC (APFC) technologies.

At present, APFC technologies are primarily adopted in general high-power power supply products. The APFC technologies can be implemented in two approaches: one is analog control based on "a dedicated analog chip combined with an external compensation loop", and the other is a digital control scheme based on "a digital controller integrated with a control algorithm".

The analog control scheme can meet application requirements of most AC-DC products and has good cost effectiveness, and is the most mature and widely used scheme in the current AC-DC products.

Generally, a PFC analog control chip mainly includes key functional input/output ports (I/Os) such as "feedforward", "feedback", "compensation" and "driving". In addition, according to an operating mode of the PFC analog control chip, "Zero-Current Detection (ZCD)" and "Current Sensing (CS)" are also included.

Compared with the digital control, analog chips have relatively poor control flexibility. Once a control chip is selected, the internal control logic and compensation mechanism of the chip are fixed, and when the control chip is applied to different products, adjustments can be only made for external parameters. Therefore, an external control loop design of the analog chip is the focus of the analog control scheme.

In some embodiments, in lighting product applications, the Boost circuit topology and the Critical Conduction Mode (CrM) control strategy are generally used to implement a PFC function.

The defects existing in the above schemes and the proposed solutions are results obtained by the inventor after practice and careful research. Therefore, the discovery process of the above problems and the solutions proposed by the present disclosure for the above problems below should be the contributions made by the inventor to the present disclosure during the disclosure process.

Example implementations are described in detail below with reference to the accompanying drawings and embodiments.

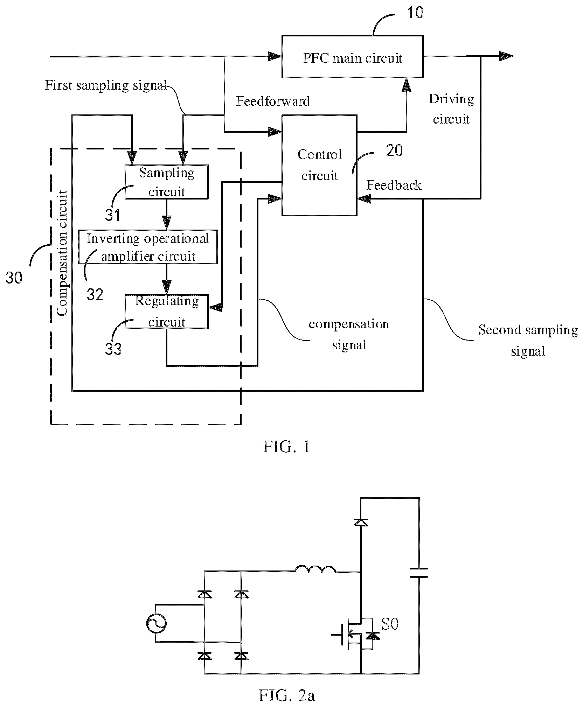

FIG. 1 shows a power factor correction circuit according to an embodiment of the present disclosure. As shown in FIG. 1, the power factor correction circuit provided in the embodiment of the present disclosure includes a PFC main circuit 10, a control circuit 20, and a compensation circuit 30. The compensation circuit 30 includes a sampling circuit 31, an inverting operational amplifier circuit 32 and a regulating circuit 33.

The PFC main circuit 10 includes at least one main switch. The main switch is switched on and off quickly according to a signal of the control circuit 20 to control energy transmission.

In some embodiments, the PFC circuit may be a boost PFC, a totem pole PFC, or the like.

In some embodiments, the PFC main circuit 10 may further include a rectifier bridge, a PFC boost inductor, an output filter capacitor, a lossless absorption network, etc. The rectifier bridge may be used to convert an Alternating Current (AC) input voltage into a Direct Current (DC) voltage. The PFC boost inductor may be used to smooth the boosted DC voltage and provide it to a subsequent-stage circuit for use. The lossless absorption network may be used to absorb a peak voltage and current when a switch device is turned off, so as to reduce the electromagnetic interference.

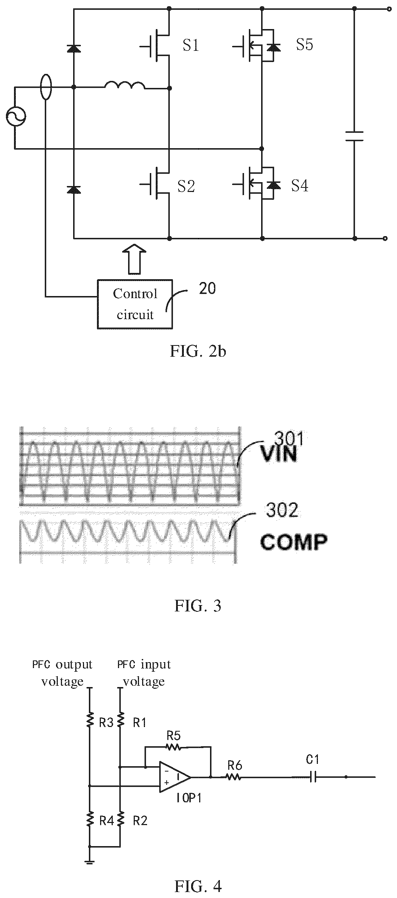

In an embodiment, the PFC main circuit may be as shown in FIG. 2a and FIG. 2b. For the PFC main circuit shown in FIG. 2a, the control circuit 20 in FIG. 1 may be used to control the main switch S0, and for the PFC main circuit shown in FIG. 2b, the control circuit 20 in FIG. 1 may be used to control switches S1, S2, S3 and S4.

The control circuit 20 is electrically coupled to the PFC main circuit 10, and is used to drive the main switch.

The compensation circuit 30 includes the sampling circuit 31, the inverting operational amplifier circuit 32 and the regulating circuit 33.

The sampling circuit 31 is used to respectively detect a first sampling signal reflecting an input voltage of the PFC main circuit 10 and a second sampling signal reflecting an output voltage of the PFC main circuit 10.

The inverting operational amplifier circuit 32 generates an inverting signal according to the first sampling signal and the second sampling signal. In some embodiments, the inverting operational amplifier circuit calculates the difference between the first sampling signal and the second sampling signal, and inverts the difference to obtain the inverter signal.

The regulating circuit 33 generates a compensation additional value according to the input voltage, and generates, according to the inverting signal and the compensation additional value, a compensation signal corresponding to the input voltage, and outputs the compensation signal to the control circuit 20. The control circuit 20 adjusts, according to the compensation signal, a duty cycle of the main switch around the input voltage zero-crossing point, so as to adjust the on-time of the main switch.

In some embodiments, the control circuit 20 increases, according to the compensation signal, the on-time of the main switch around the input voltage zero-crossing point to compensate for the on-time loss caused by the hardware.

In some embodiments, the input voltage zero-crossing point is determined according to the input voltage and the inverting signal.

In embodiments of the present disclosure, the regulating circuit 33 can generate the compensation additional value according to the input voltage, and generate, according to the inverting signal and the compensation additional value, the compensation signal corresponding to the input voltage, so that the compensation signal changes with the input voltage and is more suitable for the current input voltage. Then, the control circuit increases, according to the compensation signal, the on-time of the switch device around the input voltage zero-crossing point to compensate for the on-time loss caused by the hardware, which can achieve the THD optimization under the input voltage and better optimize the THD at the PFC level.

In some embodiments, the input voltage and the compensation signal may be as shown in FIG. 3, where curve 301 represents an input voltage signal and curve 302 represents a compensation signal. As shown in FIG. 3, a compensation signal value is raised near the zero-crossing point, and an on-time of a driving signal of the corresponding analog IC becomes larger, which is beneficial to the improvement of THD.

In some embodiments, the control signal may be obtained by the hardware detecting the input voltage of the PFC main circuit, and the regulating circuit generates the compensation additional value according to the control signal.

In some embodiments, the control signal may be generated by the control circuit according to the input voltage of the PFC main circuit, that is, the input voltage may be detected by the control circuit, and the regulating circuit is controlled after logical judgment.

FIG. 4 shows a compensation circuit according to an embodiment of the present disclosure. As shown in FIG. 4, the inverting operational amplifier circuit may be an inverting operational amplifier IOP1. The regulating circuit may include a first capacitor C1. In some embodiments, a capacitance value of the first capacitor C1 is positively correlated with the input voltage of the PFC main circuit.

As shown in FIG. 4, the compensation circuit can detect the first sampling signal reflecting the input voltage of the PFC main circuit and the second sampling signal reflecting the output voltage of the PFC main circuit. The inverting operational amplifier IOP1 generates the inverting signal according to the first sampling signal and the second sampling signal. The regulating circuit generates, according to the inverting signal and the compensation additional value, the compensation signal corresponding to the current input voltage and outputs the compensation signal to the control circuit. The control circuit adjusts, according to the compensation signal, the on-time of the main switch around the input voltage zero-crossing point.

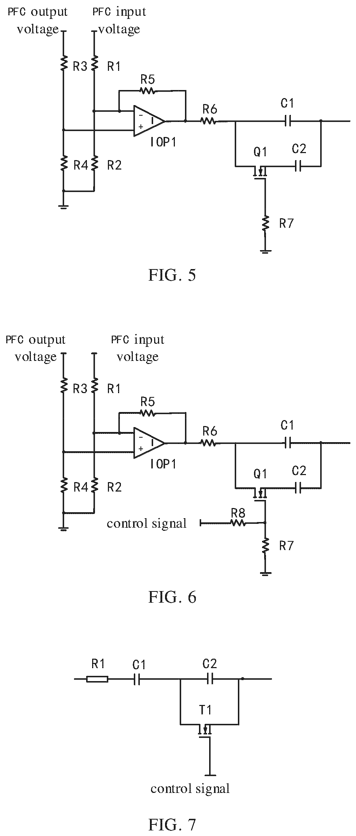

FIG. 5 shows a compensation circuit according to an embodiment of the present disclosure. As shown in FIG. 5, the inverting operational amplifier circuit may be an inverting operational amplifier IOP1. The regulating circuit may include a first capacitor C1 and a second capacitor C2. Generating, by the regulating circuit, the compensation additional value according to the input voltage includes: adjusting states of the first capacitor and the second capacitor according to the input voltage. It should be noted that a capacitor being in an operating state indicates that the capacitor is connected to the compensation circuit, and a capacitor being in a non-operating state indicates that the capacitor is not connected to the compensation circuit.

In some embodiments, the compensation circuit may further include one or more switches. By controlling the on and off of the switches, the states of the first capacitor C1 and the second capacitor C2 may be controlled.

In some embodiments, adjusting the states of the first capacitor and the second capacitor according to the input voltage includes controlling the first capacitor to be in an operating state and the second capacitor to be in a non-operating state; or controlling the first capacitor to be in the non-operating state and the second capacitor to be in the operating state.

In some embodiments, adjusting the states of the first capacitor and the second capacitor according to the input voltage further includes connecting the first capacitor and the second capacitor in series, and making both the first capacitor and the second capacitor be in operating states; or connecting the first capacitor and the second capacitor in parallel, and making both the first capacitor and the second capacitor be in operating states.

In embodiments of the present disclosure, by adjusting the states of the first capacitor C1 and the second capacitor C2, different equivalent capacitance values can be obtained, and thus different compensation additional values can be obtained to achieve different compensation effects.

In some embodiments, the regulating circuit may further include a third capacitor, and generating, by the regulating circuit, the compensation additional value according to the input voltage includes: adjusting, according to the input voltage, a connection relation and states of the first capacitor, the second capacitor and the third capacitor. In other words, in embodiments of the present disclosure, by adjusting the states of multiple capacitors, a magnitude of the equivalent capacitance value in the compensation circuit can be adjusted, thereby obtaining the compensation additional value and achieving different compensation effects.

In some embodiments, an equivalent capacitance value of a capacitor in the operating state in the regulating circuit is positively correlated with the input voltage. That is, the larger the input voltage, the larger the equivalent capacitance value in the regulating circuit.

In some embodiments, a magnitude of the input voltage can be set according to a specific product. As an example, a range of the input voltage can be 198 to 528Vac. The magnitude of the input voltage has a great impact on the THD. In embodiments of the present disclosure, a segmented compensation method (the multi-capacitor scheme mentioned above) is adopted. By switching the compensation parameter, the THD optimization under the input voltage can be achieved.

FIG. 6 shows a compensation circuit according to an embodiment of the present disclosure. As shown in FIG. 6, the regulating circuit further receives a control signal, which may be generated by the control circuit according to the input voltage of the PFC main circuit. The regulating circuit generates the compensation additional value according to the control signal.

As shown in FIG. 6, the control signal is used to control the on and off of the switch Q1. When the switch Q1 is on, the first capacitor C1 and the second capacitor C2 are connected in parallel, and both the first capacitor C1 and the second capacitor C2 are connected to the compensation circuit. When the switch Q1 is off, only the first capacitor C1 is connected to the compensation circuit. In the above embodiments, two equivalent capacitance values are obtained by turning the switch Q1 on and off, and then two compensation additional values are obtained.

FIG. 7 shows a regulating circuit according to an embodiment of the present disclosure. As shown in FIG. 7, the first capacitor C1 and the second capacitor C2 are connected in series, and the second capacitor is connected in parallel with the switch T1. The control signal is used to control the on and off of the switch T1. When the switch T1 is off, the first capacitor C1 and the second capacitor C2 are connected in series, and both the first capacitor C1 and the second capacitor C2 are connected to the compensation circuit. When the switch T1 is on, only the first capacitor C1 is connected to the compensation circuit. In the above embodiments, two equivalent capacitance values are obtained by turning the switch T1 on and off, and then two compensation additional values are obtained.

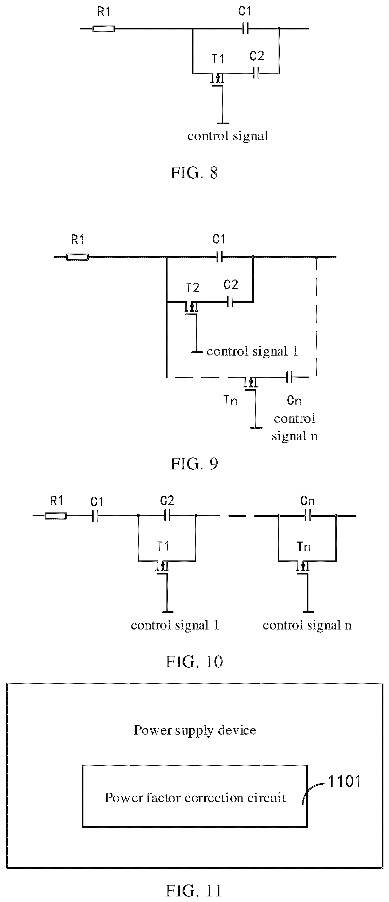

FIG. 8 shows a regulating circuit according to an embodiment of the present disclosure. As shown in FIG. 8, the first capacitor C1 and the second capacitor C2 are connected in parallel, and the second capacitor is connected in series with the switch T1. The control signal is used to control the on and off of the switch T1. When the switch T1 is on, the first capacitor C1 and the second capacitor C2 are connected in parallel, and both the first capacitor C1 and the second capacitor C2 are connected to the compensation circuit. When the switch T1 is off, only the first capacitor C1 is connected to the compensation circuit. In the above embodiments, two equivalent capacitance values are obtained by turning the switch T1 on and off, and then two compensation additional values are obtained.

FIG. 9 shows a regulating circuit according to an embodiment of the present disclosure. As shown in FIG. 9, the circuit includes a plurality of capacitors connected in parallel, including a first capacitor C1, a second capacitor C2, ... and an nth capacitor Cn, the second capacitor is connected in series with a switch T2, ... and the nth capacitor is connected in series with a switch Tn. The control signal is used to control the on and off of the switches T2 to Tn. When the switches T2 to Tn are all off, only the first capacitor C1 is connected to the compensation circuit. When the switch T2 is on, the second capacitor C2 and the first capacitor C1 are connected to the compensation circuit. Similarly, when the switch Tn is on, the nth capacitor Cn and the first capacitor C1 are connected to the compensation circuit.

FIG. 10 shows a regulating circuit according to an embodiment of the present disclosure. As shown in FIG. 10, the circuit includes a plurality of capacitors connected in series, including a first capacitor C1, a second capacitor C2, ... and an nth capacitor Cn. The second capacitor is connected in parallel with a switch T2, ... and the nth capacitor is connected in parallel with the switch Tn. The control signal is used to control the on and off of the switches T2 to Tn. When the switches T2 to Tn are all on, only the first capacitor C1 is connected to the compensation circuit. When the switch T2 is off, the second capacitor C2 and the first capacitor C1 are connected to the compensation circuit. Similarly, when the switch Tn is off, the nth capacitor Cn and the first capacitor C1 are connected to the compensation circuit.

In embodiments of the present disclosure, the terms "first", "second" and "third" are used for description purposes only and shall not be understood as indicating or implying relative importance.

The term "and/or" in the present disclosure is merely a description of an association relation of the associated objects, indicating that three kinds of relations may exist, for example, A and/or B may mean: A exists alone, both A and B exist, and B exists alone. In addition, the character "/" in the present disclosure generally indicates that the associated objects before and after are in an "or" relation.

FIG. 11 shows a power supply device according to an embodiment of the present disclosure. As shown in FIG. 11, the power supply device includes a circuit 1101 for power factor correction, which may be the power factor correction circuit in any of the above embodiments.

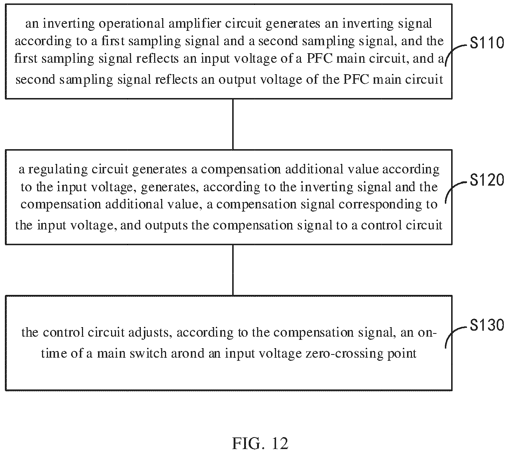

FIG. 12 shows a method for power factor correction according to an embodiment of the present disclosure. As shown in FIG. 12, the method for power factor correction is applied to the power factor correction circuit in any of the above embodiments. The method for power factor correction includes steps S110 to S130.

In the S110, the inverting operational amplifier circuit generates an inverting signal according to a first sampling signal and a second sampling signal, and the first sampling signal reflects an input voltage of the PFC main circuit, and a second sampling signal reflects an output voltage of the PFC main circuit.

In the S120, the regulating circuit generates a compensation additional value according to the input voltage, generates, according to the inverting signal and the compensation additional value, a compensation signal corresponding to the current input voltage, and outputs the compensation signal to the control circuit.

In the S130, the control circuit adjusts, according to the compensation signal, an on-time of the main switch around an input voltage zero-crossing point.

Those skilled in the art can understand that all or part of the steps to implement the above embodiments may be embodied in the following forms: a complete hardware implementation, a complete software implementation (including firmware, microcode, etc.), or a combination of hardware and software, which can be collectively referred to as "circuit", "module', or "system".

Other embodiments of the present disclosure will be readily apparent to those skilled in the art upon consideration of the specification and practice of the present disclosure disclosed herein.

The present disclosure is intended to cover any variations, uses, or adaptations of the present disclosure that follow the general principles of the present disclosure and include common knowledge or customary technical means in the technical field that are not disclosed in the present disclosure. The description and embodiments are considered as exemplary only, and the true scope of the present disclosure are indicated by the appended claims.

## Claims

1. A power factor correction circuit, comprising:
a PFC main circuit (10), comprising a main switch;
a control circuit (20), electrically coupled to the PFC main circuit (10), and configured to control the main switch; and
a compensation circuit (30), comprising a sampling circuit (31), an inverting operational amplifier circuit (32) and a regulating circuit (33), wherein
the sampling circuit (31) is configured to detect both a first sampling signal reflecting an input voltage of the PFC main circuit (10) and a second sampling signal reflecting an output voltage of the PFC main circuit (10),
the inverting operational amplifier circuit (32) is configured to generate an inverting signal according to the first sampling signal and the second sampling signal,
the regulating circuit (33) is configured to generate a compensation additional value according to the input voltage, generate, according to the inverting signal and the compensation additional value, a compensation signal corresponding to the input voltage, and output the compensation signal to the control circuit (20),
wherein the control circuit (20) is configured to adjust, according to the compensation signal, an on-time of the main switch around an input voltage zero-crossing point.

2. The power factor correction circuit according to claim 1, wherein the regulating circuit (33) comprises a first capacitor (C1) and a second capacitor (C2), and the regulating circuit (33) is further configured to adjust states of the first capacitor (C1) and the second capacitor (C2) according to the input voltage.

3. The power factor correction circuit according to claim 2, wherein the regulating circuit (33) is further configured to:
control the first capacitor (C1) to be in an operating state and the second capacitor (C2) to be in a non-operating state; or
control the first capacitor (C1) to be in the non-operating state and the second capacitor (C2) to be in the operating state.

4. The power factor correction circuit according to claim 3, wherein the regulating circuit (33) is further configured to:
connect the first capacitor (C1) and the second capacitor (C2) in series, and make the first capacitor (C1) and the second capacitor (C2) be in operating states; or
connect the first capacitor (C1) and the second capacitor (C2) in parallel, and make the first capacitor (C1) and the second capacitor (C2) be in operating states.

5. The power factor correction circuit according to claim 2, wherein the regulating circuit (33) further comprises a third capacitor, and the regulating circuit (33) is further configured to: adjust, according to the input voltage, a connection relation and states of the first capacitor (C1), the second capacitor (C2) and the third capacitor.

6. The power factor correction circuit according to claim 2, wherein an equivalent capacitance value of a capacitor in the operating state in the regulating circuit is positively correlated with the input voltage.

7. The power factor correction circuit according to claim 1, wherein the inverting operational amplifier circuit (32) is further configured to:
calculate the difference between the first sampling signal and the second sampling signal, and invert the difference to obtain the inverting signal.

8. The power factor correction circuit according to claim 1, wherein the control circuit (20) is configured to increase, according to the compensation signal, the on-time of the main switch around the input voltage zero-crossing point to compensate for an on-time loss caused by hardware.

9. The power factor correction circuit according to claim 1, wherein the regulating circuit (33) is configured to generate a compensation additional value according to a control signal, and the control signal is generated by the control circuit (20) according to the input voltage of the PFC main circuit (10).

10. A power supply device, comprising the power factor correction circuit according to any one of claims 1 to 9.

11. A method for power factor correction, performed by a power factor correction circuit, wherein the power factor correction circuit comprises: a PFC main circuit (10), comprising a main switch, a control circuit (20), electrically coupled to the PFC main circuit (10), and a compensation circuit (30), comprising a sampling circuit (31), an inverting operational amplifier circuit (32) and a regulating circuit (33), and wherein the method comprises:
generating (S110), by the inverting operational amplifier circuit (32), an inverting signal according to a first sampling signal and a second sampling signal, wherein an input voltage of the PFC main circuit (10) is reflected by the first sampling signal, and an output voltage of the PFC main circuit (10) is reflected by the second sampling signal;
generating (S120), by the regulating circuit (33), a compensation additional value according to the input voltage, generating, according to the inverting signal and the compensation additional value, a compensation signal corresponding to the input voltage, and outputting the compensation signal to the control circuit (20); and
adjusting (S130), by the control circuit (20), an on-time of the main switch around an input voltage zero-crossing point according to the compensation signal.
